Europäisches Patentamt

(19) European Patent Office

Office européen des brevets

(11) Numéro de publication: **0 123 596**
**B1**

(12) **FASCICULE DE BREVET EUROPÉEN**

(45) Date de publication du fascicule du brevet:
03.09.86

(21) Numéro de dépôt: 84400690.8

(22) Date de dépôt: 06.04.84

(51) Int. Cl.⁴: **F 23 C 11/02**, B 01 J 8/44

(54) Appareil de fluidisation avec échangeur de chaleur interne.

(30) Priorité: 07.04.83 FR 8305689

(43) Date de publication de la demande:
31.10.84 Bulletin 84/44

(45) Mention de la délivrance du brevet:
03.09.86 Bulletin 86/36

(84) Etats contractants désignés:
AT BE CH DE GB IT LI LU NL SE

(56) Documents cité:
EP-A-0 064 492
US-A-3 908 284

(73) Titulaire: Etablissement public dit:
CHARBONNAGES DE FRANCE, 9, Avenue
Percier, F-75008 Paris (FR)

(72) Inventeur: Chrysostome, Gérard, 7 rue de Nevers,
F-71200 Le Creusot (FR)
Inventeur: Feugier, Alain, 3, ruelle du Moulle
Morainvilliers, F-78360 Orgeval (Yvelines) (FR)
Inventeur: Kita, Jean-Claude, 204 rue Nationale,
F-57600 Forbach (Moselle) (FR)

(74) Mandataire: Chevallier, Robert Marie Georges,
Cabinet BOETTCHER 23, rue La Boétie, F-75008
Paris (FR)

## Description

L'invention a pour objet un appareil de fluidisation comprenant un échangeur de chaleur interne qui permet de réaliser un échange de chaleur avec le lit fluidisé.

En général, un tel échange a lieu dans le sens de la soustraction de calories au lit fluidisé, particulièrement quand ce dernier est établi dans une chaudière conçue pour la combustion du charbon à l'état fluidisé. En effet, la combustion en lit fluidisé nécessite que l'on maîtrise la température au sein du lit.

Il est connu de placer dans un lit fluidisé des tubes d'un échangeur de chaleur. On fait varier le coefficient d'échange de ce dernier en le plaçant dans une zone où l'on peut faire varier le niveau du lit et en faisant en sorte que le lit se trouve à des niveaux différents, ce que l'on réalise par une variation convenable de la vitesse du gaz de fluidisation. En modifiant la hauteur du lit fluidisé, on obtient que les tubes de l'échangeur s'y trouvent plongés de manière variable. Or, le coefficient d'échange est beaucoup plus élevé à l'intérieur du lit (par exemple 300 W/m$^2$/°C) qu'en dehors du lit (par exemple 20 W/m$^2$/°C). Toutefois, faire varier notablement le niveau du lit, en modifiant notablement le débit du gaz de fluidisation, comporte des inconvénients en particulier, cela entraîne une variation importante de la perte de charge de la grille de répartition des gaz de fluidisation, d'où des risques de mauvaise fluidisation de la charge.

L'invention résulte de la constatation que l'on peut modifier de la façon souhaitable le coefficient d'échange d'un échangeur disposé dans un lit fluidisé, sans avoir à agir sur la hauteur de ce dernier, quand on emploie un appareil ds fluidisation contenant des canaux complémentaires d'injection de gaz disposés entre les canaux principaux du gaz de fluidisation, à condition de faire passer les tubes de l'échangeur au-dessus des canaux complémentaires, à l'intériéur de la zone d'action de ces derniers.

On entend ici par zone d'action, la région de l'espace où l'influence de l'injection de gaz par les canaux complémentaires produit une modification de la fluidisation à l'intérieur du lit fluidisé préalablement établi par le gaz de fluidisation qui sort par ces canaux principaux. Cette zone varie en importance selon la taille des appareils et selon leurs conditions d'utilisation.

On peut préciser, cependant, que la zone d'action des canaux supplémentaires commence à une faible distance de leur sommet et que l'on peut placer, typiquement, selon l'invention, les tubes de l'échangeur à une distance de quelques centimètres des canaux complémentaires, par exemple à une distance de 1 à plusieurs centimètres. En fait, dans des appareils où la zone d'action des canaux complémentaires est plus importante, elle offre la possibilité de placer plusieurs tubes étagés à l'intérieur de cette zone, le premier de ces tubes étant situé à la distance que l'on vient d'indiquer.

Un appareil de fluidisation tel que mentionné plus haut est ·décrit dans le Ep-A-84 492, considère compris dans l'état de la technique selon l'Art. 54(3) de al Convention sur le Brevet Européen.

Dans ce document, il n'est décrit aucun échangeur thermique placé dans le lit fluidisé. Les canaux complémentaires n'y sont destinés qu'à permettre de réaliser des modifications rapides et importantes de l'allure de la combustion à l'intériéur du lit, par changement de la vitesse du gaz comburant entre 1 m/s et 6,1 m/s.

Selon la présente invention, on n'envisage pas de recourir à des variations aussi fortes de la vitesse du gaz. Au contraire, quand on dispose un échangeur dans la zone d'action des canaux secondaires, on obtient une variation importante du coefficient d'échange à des vitesses beaucoup plus faibles du gaz ainsi qu'on le montrera plus loin.

Pour bien faire comprendre l'invention, on donnera maintenant, sans intention limitative, une description d'un exemple de réalisation. On se reportera aux dessins annexés dans lesquels:

- la figure 1 est une vue de dessus d'une grille de combustion à canaux principaux et à canaux complémentaires de soufflage d'air,

- la figure 2 est une vue partielle, agrandie, en coupe brisée selon II-II de la figure I, montrant des canaux principaux et des canaux complémentaires de la grille de la figure 1 avec un échangeur de chaleur disposé conformément à l'invention,

- la figure 3 est une vue partielle de dessus de la grille de la figure 2.

- la figure 4 est un graphique qui montre la variation du coefficient d'échange globale en fonction de la vitesse de fluidisation.

L'appareil de fluidisation décrit ici en exemple est un foyer de combustion d'une chaudiéré brûlant du combustible à l'état fluidisé. Seule la grille est concernée par la présente invention; elle sera donc seule décrite.

Cette grille 1 est réalisée en métal approprié moulé ou soudé ou en réfractaire pour faire apparaître des cavités 2 à profil tronconique ou pyramidal s'élargissant du bas vers le haut dans l'épaisseur de la grille quand celle-ci est disposée horizontalement, comme il est habituel. A son extrémité inférieure chaque cavité 2 a une ouverture 3 qui est raccordée à une conduite 4 de distribution principale de fluide gazeux par des canaux 5, que l'on appelle ici les canaux principaux, sur chacun desquels est montée une vanne 6.

A chacune des jonctions des cavités 2, la matière qui constitue la grille 1 donne naissance à un renflement 7 qui est traversé de bas en haut par une ouverture 8. Dans chacune de ces ouvertures 8 est engagé un canal complémentaire 9 qui part sous la grille 1 d'une conduite 10 de distribution complémentaire de fluidé gazeux et qui s'élève audessus de la grille 1 pour se terminer par une partie supérieure 11. Celle-ci est obturée en 12 à son sommet dirigé vers le haut et elle a une ou plusieurs ouvertures latérales 13.

Le soufflage de l'air comburant par les canaux principaux 5 permet de mettre la matière combustible en régime de fluidisation, au-dessus de la grille 1. Toutefois, il existe alors dans le lit fluidisé des zones de très faible agitation au-dessus de chaque renflement 7 et de chaque canal complémentaire 9. Chacune de ces zones est limitée par un contour sensiblement paraboloïdal suggéré par un trait mixte 15.

En pratique, il n'existe pas de limite aussi précise entre le lit fluidisé et la zone 14 de faible agitation qui surmonte chaque renflement 7. L'importance de cette zone varie en fonction de l'importance donnée aux renflements 7 et en fonction de la vitesse du fluide gazeux soufflé par les canaux principaux 5. Dans tous les cas cette zone 14 existe et se trouve au-dessus des canaux complémentaires 9. Par conséquent, tout soufflage de gaz par ces canaux complémentaires 9 a pour résultat de modifier l'état de la matière à l'intérieur des zones 14. Le changement tend à créer une agitation de plus en plus grande dans ces zones 14 jusqu'au moment où la vitesse du gaz soufflé par les canaux complémentaires 9 devient assez grande pour qu'il s'établisse au-déssus de la grille 1 un lit fluidisé homogène.

Les zones 14 définiés plus haut sont donc aussi les zones d'action des canaux complémentaires 9; c'est-à-dire les zones où l'air soufflé par ces derniers met en agitation plus grande les parties du lit qui étaient peu agitées par le gaz soufflé par les canaux principaux 5.

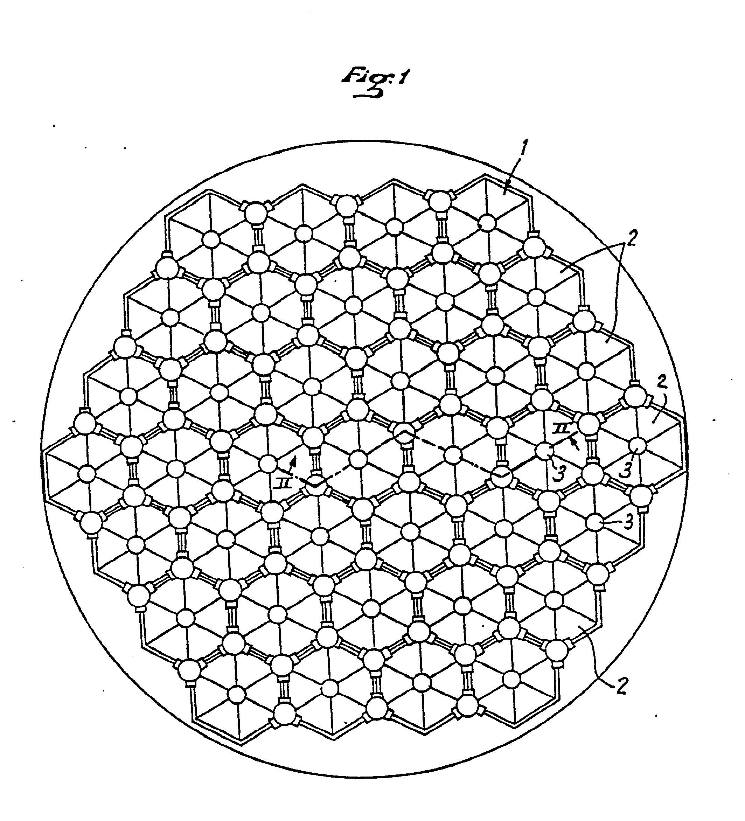

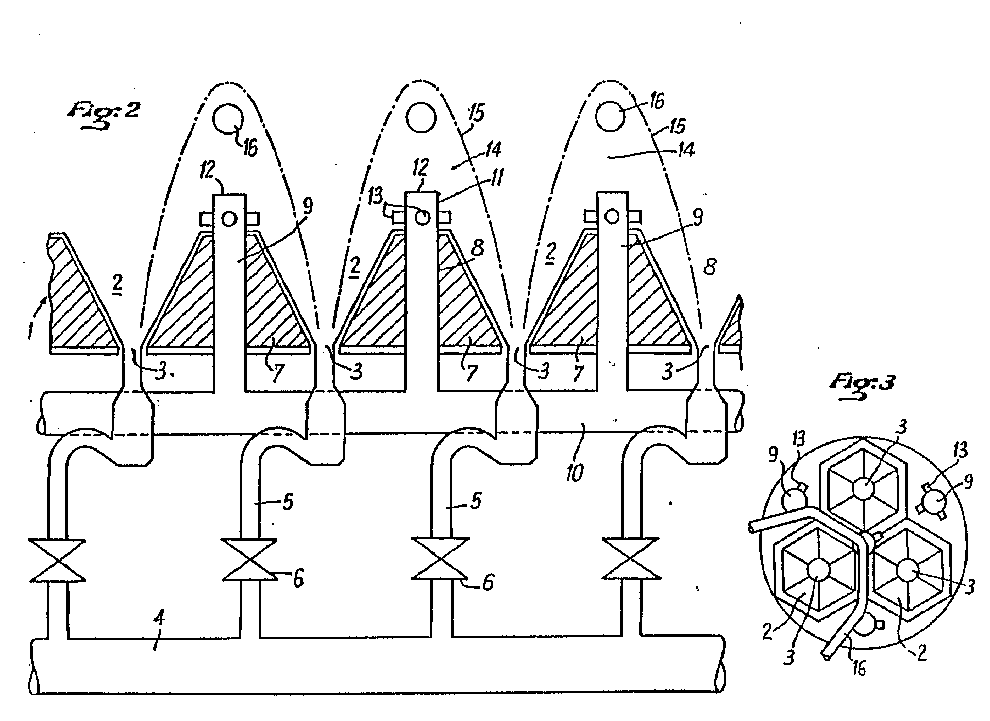

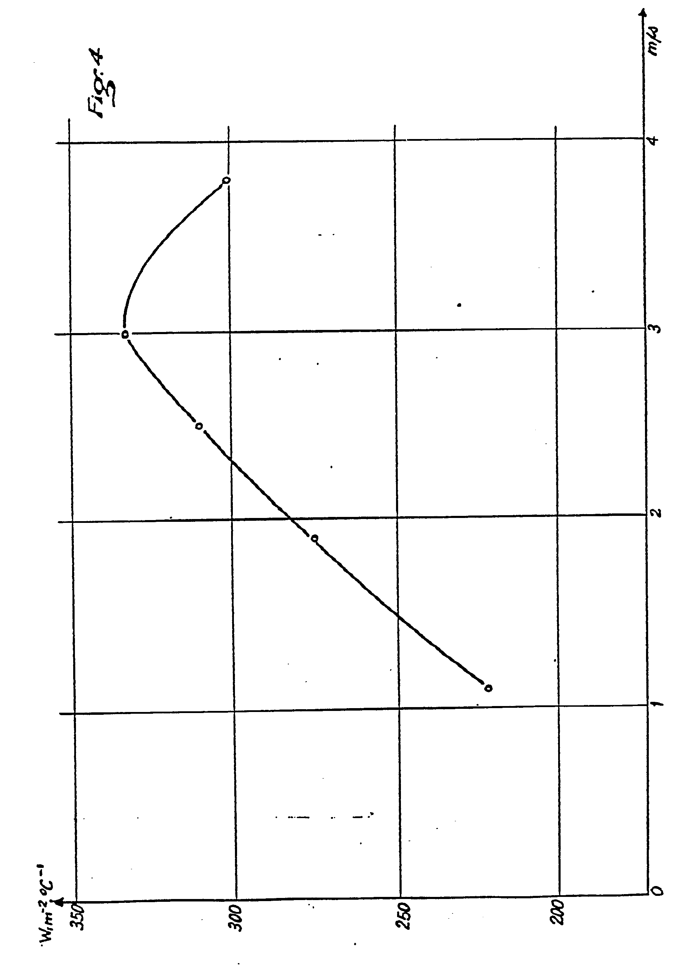

Il est particulièrement avantageux de disposer au moins un tube 16 d'un échangeur de chaleur dans les zones 14, en le conformant pour le faire passer successivement au-dessus d'une pluralité de canaux complémentaires 9 comme le montre la figure 3.

Dans un exemple de réalisation à faibles dimensions d'une grille 1 associée à un échangeur de chaleur, conformément à l'invention, cet échangeur n'avait qu'un seul tube 16 qui était placé à 1 cm au-dessus du sommet 12 des canaux complémentaires 9. Dans un réacteur industriel de grandes dimensions, les zones 14 peuvent avoir de plus grandes dimensions du fait de la taille plus importante des pyramides; le tube 16 peut être placé plus haut. De plus, il devient possible de superposer à l'intérieur des zones 14 plusieurs tubes d'échange de chaleur.

Quand les canaux complémentaires 5 ne sont pas mis en service le ou les tubes 16 de l'échangeur sont au sein d'une masse de matière faiblement agitée dans les zones 14. La quantité de chaleur évacuée par les tubes 16 est faible.

Quand les canaux complémentaires 5 sont alimentés en gaz à un débit progressivement croissant, la quantité de chaleur évacuée devient plus importante à mesure que l'agitation augmente dans les zones 14.

On peut donc moduler la quantité de chaleur extraite sans faire varier la hauteur du lit fluidisé, en agissant sur le débit de gaz soufflé par les canaux complémentaires 9.

Un appareil de fluidisation à échangeur de chaleur conforme à l'invention apporte une grande souplesse de fonctionnement. On passe d'une marche à allure réduite (par soufflage à travers les canaux principaux 5 seuls) à une marche à allure maximale (par soufflage à travers les canaux principaux 5 et les canaux complémentaires 9) en améliorant en même temps le transfert thermique réalisé par l'échangéur, par simple mise en service des canaux complémentaires 9.

L'appareil de l'invention donne aussi la possibilité d'une régulation simple de la température de combustion au sein du lit fluidisé. Si la température de ce dernier baisse, en diminuant le débit d'air à travers les canaux complémentaires 9, on diminue le coefficient de transfert thermique de l'échangeur et on réduit l'excès d'air, ce qui favorise une remontée de la température.

En outre, comme les tubes 16 sont placés dans des zones 14 où l'agitation du lit est moins grande, comme on l'a expliqué plus haut, leur usure par frottements mécaniques est réduite.

La figure 4 est un graphique qui montre la variation du coefficient d'échange global indiqué en ordonnées en Watt/m$^2$/°C en fonction de la vitesse de fluidisation indiquée en abcisses en m/s, avec une grille 1 et un tube 16 placé à 1 cm au-dessus des canaux complémentaires 9.

Les caractéristiques du charbon utilisé étaient les suivantés:

**Granulométrie**

< 10 mm: 95,4 %
< 3,15 mm: 68,9 %
< 1 mm: 36,6 %
< 0,5 mm: 19,6 % > midité: 6,6 %
Cendres: 54,6 %
Matières volatiles: 20,4 %
PCI: 15 600 kJ/kg sec

Les conditions opératoires étaient les suivantes:
- température du lit fluidisé: 950°C
- perte de charge du lit: 400 mm CE ou 40 millibars environ.

Le débit d'air total de fluidisation a été réglé à différentes valeurs comprises entre 145 et 265 m3N/h, ce qui a permis de réaliser des vitesses de fluidisation comprises entre 1,1 et 3,8 m/s.

Aux vitesses inférieurés à 2 m/s, l'air était soufflé par les cannaux principaux 5 à un débit permettant une vitesse progressivement croissante de 1,1 à 2 m/s. Par les canaux complémentaires, il n'était soufflé qu'un débit d'air complémentaire minimum technique.

Aux vitesses supérieures à 2 m/s, à partir de cette valeur, le débit d'air soufflé par les canaux principaux 5 était constant et le débit d'air complémentaire par les canaux complémentaires 9 était progressivement élevé jusqu'à 3,8 m/s.

Dans le domaine exploré de 1,1 à 3,8 m/s, l'essai a montré qu'il était possible de faire varier le coefficient global d'échange du tube 16 en modifiant le débit d'air.

Il a été constaté que le coefficient global d'échange a passé par un maximum (K = 334 W.m $^{-2}$.°C $^{-1}$) quand le débit d'air complémentaire représentait 40 % du débit d'air total de fluidisation et que la vitesse dé fluidisation était de 3 m/s.

Ce coefficient a chuté pour des valeurs supérieures de la vitesse du fait d'une vitesse trop élevée au voisinage du tube 16 (mauvais contacts solidetube et arrivée de l'air froid sur le tube).

En pratique, pour une marche à allure nominale de l'installation, on cherchera le coefficient de transfert thermique du tube 16 maximum en optimisant le rapport air complémentaire/air total de fluidisation.

Ainsi qu'on l'a expliqué, dans des appareils conformes à l'invention mais ayant des dimensions différentes, il est possible que le coefficient d'échange présente une courbe de variation autre que celle de la figure 4.

Ce qui reste constant, selon l'invention, est qu'il existe une zone d'action des canaux complémentaires 9 dans laquelle il est avantageux de disposer un ou plusieurs tubes d'échange de chaleur pour pouvoir modifier le transfert thermique avec le lit fluidisé, en agissant notamment sur le débit du gaz soufflé par les canaux complémentaires.

**Revendications**

1. Appareil de fluidisation comprenant un échangeur de chaleur avec le lit fluidisé, une grille (1) présentant des cavités (2) raccordées à des canaux principaux (5) de soufflage d'un gaz de fluidisation, des renflements (7) situés aux jonctions des cavités (2) et présentant des ouvertures (8) traversées par des canaux complémentaires (9) ayant leur sommet (12) situé au-dessus de la grille (1) pour le soufflage d'un gaz complémentaire dans une zone d'action (14) s'étendant au-dessus de chaque renflement (7), caractérisé en ce que l'échangeur de chaleur comprend au moins un tube (16) conformé pour s'étendre au-dessus de la grille (7) dans plusieurs zones d'action (14) de canaux complémentaires (9).

2. Appareil selon la revendication 1, caractérisé en ce que le tube (16) est disposé à une distance de la grille (1) allant de 1 cm à plusieurs centimètres.

3. Appareil selon la revendication 1, caractérisé en ce que plusieurs tubes d'échange de chaleur sont étagés les uns au-dessus des autres à l'intérieur des zones d'action (14).

**Patentansprüche**

1. Fluidisierungsvorrichtung mit einem ein Wirbelschichtbett aufweisenden Wärmetauscher, einem Rost (1), der Hohlräume (2) aufweist, die an Haupteinblaskanäle (5) für ein Fluidisierungsgas angeschlossen sind, mit Ausbauchungen (7), die an den Verbindungsstellen der Hohlräume (2) liegen und öffnungen (8) haben, die von zusätztichen Kanälen (9) durchdrungen werden, deren Scheitel (12) oberhalb des Rostes (1) liegt, um ein zusätzliches Gas in eine Aktionszone (14) einzublasen, die sich oberhalb jeder Ausbauchung erstreckt, dadurch gekennzeichnet, dass jeder Wärmetauscher mindestens ein Rohr (16) aufweist, das derart ausgebildet ist, dass es sich oberhalb des Rostes in mehrere Aktionszonen (14) der zusätzlichen Kanäle (9) erstreckt.

2. Fluidisierungsvorrichtung nach Anspruch dadurch gekennzeichnet, dass das Rohr (16) in einem Abstand vom Rost (1) liegt, der 1 cm bis zu mehreren Zentimetern betragen kann.

3. Fluidisierungsvorrichtung nach Anspruch 1, dadurch gekennzeichnet, dass mehrere Wärmetauscherrohre übereinander im Inneren der Aktionszonen (14) angeordnet sind.

**Claims**

1. An apparatus for fluidization, comprising an exchanger of heat with the fluidized bed, a grate (1) exhibiting cavities (2) connected to main channels (5) for blowing in a fluidizing gas, bosses (7) situated at the junctions of the cavities (2) and exhibiting openings (8) through which pass complementary channels (9) having their tips (12) situated above the grate (1) for blowing a complementary gas into a zone of action (14) which extends above each boss (7), characterised in that the heat exchanger comprises at least one tube (16) shaped im order to extemd above the grate (7) into a number of zones of action (14) of complementary channels (9).

2. An apparatus as in Claim 1, characterised in that the tube (16) is arranged at a distance from the grate (1) of from 1 cm to several centimetres.

3. An apparatus as in Claim 1, characterised in that a number of heat-exhanger tubes are tiered one above the other within the zones of action (14).

# Fig:1

Fig.2

Fig.3

0 123 596

Fig. 4